# EUROPÄISCHE PATENTANMELDUNG

(11) **EP 2 535 684 A2**
(43) Veröffentlichungstag der Anmeldung: **19.12.2012**
(21) Anmeldenummer: 12168989.7
(22) Anmeldetag: 23.05.2012
(51) Int. Cl.: G01C 15/00

(54) **Lasersystem zum Erzeugen einer Lasermarkierung auf einem Untergrund**

(30) Priorität: 14.06.2011 DE 102011077508
(71) Anmelder: HILTI Aktiengesellschaft, 9494 Schaan (LI)
(72) Erfinder: Dang, Lieu-Kim, 9473 Gams (CH); Wuersch, Christoph, 9470 Werdenberg (CH)
(74) Vertreter: Söllner, Oliver

(57) **Zusammenfassung**

Lasersystem (1) zum Erzeugen einer Lasermarkierung (23) auf einem Untergrund (4, 7) aufweisend ein Lasergerät (2) mit einer Strahlquelle (11), die einen Laserstrahl (14) entlang einer ersten optischen Achse (16) aussendet, und eine Umlenkeinheit (3) mit einer Umlenkoptik (19), die den Laserstrahl (14) entlang einer zweiten optischen Achse (22) umlenkt, wobei die erste und zweite optische Achse (16, 22) unter einem Winkel von 90° angeordnet sind und die Umlenkeinheit (3) zum Lasergerät (2) verstellbar ist.

## Beschreibung

### Technisches Gebiet

Die vorliegende Erfindung betrifft ein Lasersystem zum Erzeugen einer Lasermarkierung auf einem Untergrund gemäß dem Oberbegriff des Anspruchs 1 sowie eine Umlenkeinheit für ein Lasersystem zum Erzeugen einer Lasermarkierung auf einem Untergrund gemäß dem Oberbegriff des Anspruchs 14.

### Stand der Technik

Bekannte Lasersysteme zum Erzeugen einer Lasermarkierung auf einem Untergrund umfassen ein Lasergerät mit einer Strahlquelle, die einen Laserstrahl entlang einer optischen Achse aussendet. Der Laserstrahl wird im Innenausbau unter anderem zur Markierung der Lage von Trennwänden verwendet. Um die Lage einer Trennwand mit Hilfe des bekannten Lasersystems zu markieren, wird das Lasergerät an einer vorhandenen Referenzfläche, beispielsweise einer Wand, ausgerichtet. Dabei kann der Laserstrahl parallel, senkrecht oder unter einem Winkel zur Referenzfläche angeordnet werden. Der Bediener überträgt die Lasermarkierung als Markierung für eine erste Trennwand auf den Untergrund. Um eine zweite parallele Trennwand zu markieren, versetzt der Bediener das Lasergerät und richtet das Lasergerät erneut zur Referenzfläche aus.

Nachteilig ist, dass der Bediener die Ausrichtung des Lasergerätes zur Referenzfläche für jede parallele Markierung wiederholen muss. Dies erzeugt für den Bediener zusätzlichen Aufwand und stellt eine mögliche Fehlerquelle dar. Das Lasergerät muss für jede parallele Markierung exakt zur Referenzfläche ausgerichtet werden.

### Darstellung der Erfindung

Die Aufgabe der vorliegenden Erfindung besteht darin, ein Lasersystem zum Erzeugen einer Lasermarkierung auf einem Untergrund bereitzustellen, bei dem der Aufwand zum Ausrichten des Lasersystems für den Bediener reduziert ist. Außerdem soll die Gefahr von Abweichungen zur parallelen Ausrichtung mehrerer Markierungen reduziert sein.

Die Aufgabe wird bei dem eingangs genannten Lasersystem erfindungsgemäß durch die Merkmale des unabhängigen Anspruchs 1 gelöst. Vorteilhafte Weiterbildungen sind in den abhängigen Ansprüchen angegeben.

Erfindungsgemäß weist das Lasersystem eine Umlenkeinheit auf mit einer Umlenkoptik, die den Laserstrahl entlang einer zweiten optischen Achse umlenkt, wobei die erste und zweite optische Achse unter einem Winkel von 90° angeordnet sind und die Umlenkeinheit zum Lasergerät verstellbar ist. Durch die Verstellbarkeit der Umlenkeinheit zum Lasergerät kann der Bediener mit geringem Justageaufwand an mehreren Stellen auf einem Untergrund Lasermarkierungen erzeugen, die beispielsweise die Lage von Trennwänden anzeigen. Der Bediener richtet das Lasergerät zu Beginn parallel, senkrecht oder unter einem Winkel zu einer Referenzfläche aus und lässt die Ausrichtung des Lasergerätes im weiteren Verlauf unverändert. Anschließend positioniert der Bediener die Umlenkeinheit an die Stelle, an der die Lasermarkierung für die parallele Trennwand erzeugt werden soll.

Die Strahlquelle des Lasergerätes sendet einen Laserstrahl aus, der sich entlang einer ersten optischen Achse ausbreitet. Der ausgesandte Laserstrahl ist als punkt- oder linienförmiger Laserstrahl ausgebildet, der sich in Richtung der ersten optischen Achse ausbreitet. Die Punkt- oder Linienform beschreibt die Strahlform des Laserstrahles in einer Ebene senkrecht zur ersten optischen Achse. Alternativ kann der Laserstrahl, der auf die Umlenkoptik gerichtet ist, von einem als Rotationslaser ausgebildeten Lasergerät, das in einem Scanmodus betrieben wird, erzeugt werden. Im Scanmodus rotieren die Optik und der Laserstrahl zwischen zwei Umkehrpunkten periodisch hin und her. Der Teil des hin- und herbewegten Laserstrahls, der auf die Umlenkoptik der Umlenkeinheit trifft, wird von der Umlenkoptik um 90° umgelenkt und erzeugt auf dem Untergrund eine Lasermarkierung. Als erste optische Achse wird bei einem Rotationslaser im Scanmodus die Hauptachse definiert, die durch den Mittelpunkt des hin- und herbewegten Laserstrahls verläuft. Bei Ausrichten des Rotationslasers wird die Hauptachse des hin- und herbewegten Laserstrahls an der Referenzfläche ausgerichtet.

In einer bevorzugten Ausführung sind die Strahlquelle in einem ersten Gehäuse und die Umlenkoptik in einem zweiten Gehäuse angeordnet. Besonders bevorzugt sind die Strahlquelle an einer ersten Nivelliereinrichtung unabhängig von der Ausrichtung des ersten Gehäuses und die Umlenkoptik an einer zweiten Nivelliereinrichtung unabhängig von der Ausrichtung des zweiten Gehäuses auf dem Untergrund an einer durch die Schwerkraft bestimmten vertikalen Richtung ausrichtbar. Durch die Unterbringung der Strahlquelle und der Umlenkoptik in verschiedenen Gehäusen ist der Abstand der Umlenkeinheit zum Lasergerät beliebig einstellbar. Mit Hilfe der beiden voneinander unabhängigen Nivelliereinrichtungen für die Strahlquelle und die Umlenkoptik wird sichergestellt, dass das Lasergerät und die Umlenkeinheit unabhängig vom jeweiligen Untergrund entsprechend zur vertikalen Richtung ausgerichtet sind, so dass die Laserstrahlen in einer horizontalen Strahlebene verlaufen.

Die erste Nivelliereinrichtung für die Strahlquelle ist bevorzugt als zweidimensionale Nivelliereinrichtung ausgebildet, so dass der Laserstrahl in einer horizontalen Ebene senkrecht zur vertikalen Richtung ausgerichtet ist. Die zweite Nivelliereinrichtung für die Umlenkoptik ist bevorzugt als eindimensionale oder zweidimensionale Nivelliereinrichtung ausgebildet. Eine zweidimensionale Nivelliereinrichtung ist dann vorteilhaft, wenn ein Lotstrahl mittels einer Strahlteilungsoptik aus dem Laserstrahl ausgekoppelt wird. Die zweidimensionale Nivelliereinrichtung stellt sicher, dass der Lotstrahl parallel zur vertikalen Richtung ausgerichtet ist. Eine eindimensionale Nivelliereinrichtung hat gegenüber einer zweidimensionalen Nivelliereinrichtung den Vorteil eines einfacheren mechanischen und damit kostengünstigeren Aufbaus der Nivelliereinrichtung. Um eine linienförmige Lasermarkierung auf dem Untergrund zu erzeugen, wird der umgelenkte Laserstrahl in einer Richtung senkrecht zur Umlenkebene und damit parallel zur vertikalen Richtung hin und her bewegt. Daher ist eine exakte Ausrichtung in dieser Richtung nicht erforderlich und eine eindimensionale Nivelliereinrichtung ist ausreichend.

In einer bevorzugten Ausführungsform ist die zweite Nivelliereinrichtung als passive Nivelliereinrichtung ausgebildet. Eine passive Nivelliereinrichtung hat den Vorteil, dass keine Stromquelle erforderlich ist und die Umlenkeinheit daher kompakter ausgebildet ist im Vergleich zu einer Umlenkeinheit, die im Betrieb eine Stromquelle benötigt.

Besonders bevorzugt weist die Umlenkeinheit eine Strahlformungsoptik auf, die den umgelenkten Laserstrahl in einer Richtung senkrecht zu einer von der ersten und zweiten optischen Achse aufgespannten Strahlebene aufweitet. Eine Strahlformungsoptik ist ein optisches Element, das eine Strahlformung des umgelenkten Laserstrahls bewirkt und ist bevorzugt als Zylinderlinse, diffraktive Optik oder sonstige geeignete Strahlformungsoptik ausgebildet. Die Strahlformungsoptik weitet den Laserstrahl so auf, dass auf dem Untergrund eine linienförmige Lasermarkierung erzeugt wird und die Sichtbarkeit der Lasermarkierung auf dem Untergrund verbessert wird. Dabei kann die linienförmige Lasermarkierung als durchgehende Lasermarkierung oder als unterbrochene, aus mehreren Abschnitten bestehende Lasermarkierung ausgebildet sein.

In einer bevorzugten Ausführungsform ist die Strahlformungsoptik in die Umlenkoptik integriert. Bei einer integrierten Strahlformungsoptik besteht zwischen der Strahlformungsoptik und der Umlenkoptik keine Grenzfläche. Die integrierte Strahlformungsoptik hat den Vorteil, dass die Justierung der Strahlformungsoptik relativ zur Umlenkoptik bereits bei der Herstellung der Umlenkoptik erfolgt und nur ein Trägerelement erforderlich ist.

In einer alternativen bevorzugten Ausführungsform grenzt die Strahlformungsoptik unmittelbar an die Umlenkoptik an. Bei einer unmittelbar angrenzenden Strahlformungsoptik weisen die Umlenkoptik und die Strahlformungsoptik eine gemeinsame Grenzfläche auf. Zwischen den optischen Flächen der beiden optischen Elemente ist kein sonstiges optisches Element oder Medium mit einem unterschiedlichen Brechungsindex, wie beispielsweise Luft, angeordnet. Die unmittelbar angrenzende Strahlformungsoptik hat den Vorteil, dass zwei unterschiedliche optische Materialien kombiniert werden können und dadurch die Eigenschaften des optischen Systems flexibler und besser an die Anforderungen anpassbar sind. Trotz unterschiedlicher optischer Materialien ist nur ein Trägerelement erforderlich und die Justierung der Strahlformungsoptik erfolgt bereits bei der Herstellung der Umlenkoptik.

In einer bevorzugten Ausführungsform ist die zweite Nivelliereinrichtung als aktive Nivelliereinrichtung ausgebildet. Bei einer aktiven Nivelliereinrichtung wird die Umlenkoptik mit Hilfe von Verstelleinheiten zur vertikalen Richtung ausgerichtet. Eine aktive Nivelliereinrichtung hat den Vorteil, dass die Verstelleinheiten dazu genutzt werden können, die Umlenkoptik in einer Richtung parallel zur zweiten optischen Achse des umgelenkten Laserstrahls hin- und herzubewegen und auf dem Untergrund eine linienförmige Lasermarkierung zu erzeugen.

Besonders bevorzugt ist die aktive Nivelliereinrichtung in einem Scanmodus betreibbar. Im Scanmodus wird die Umlenkoptik mit Hilfe einer Verstelleinheit der Nivelliereinrichtung um eine Kippachse zwischen zwei Umkehrpunkten periodisch hin- und herbewegt, wobei die Kippachse parallel zur ersten optischen Achse und damit senkrecht zur zweiten optischen Achse angeordnet ist. Durch die Hin- und Herbewegung der Umlenkoptik wird der umgelenkte Laserstrahl auf dem Untergrund periodisch hin- und herbewegt und erzeugt auf dem Untergrund eine gut sichtbare linienförmige Lasermarkierung.

In einer bevorzugten Ausführungsform ist die Umlenkoptik als Pentaprisma mit einer Eintrittsfläche, einer ersten und zweiten Reflexionsfläche und einer Austrittsfläche ausgebildet. Ein Pentaprisma ist ein transmissives optisches Element in Form eines fünfseitigen Prismas, wobei vier der fünf Flächen optisch genutzt werden. Bei einem Pentaprisma stehen ein über die Eintrittsfläche in das Pentaprisma eintretender Lichtstrahl und ein über die Austrittsfläche aus dem Pentaprisma ausgetretener Lichtstrahl senkrecht zu einander. Da bei einem Pentaprisma der Austrittswinkel eines Lichtstrahls senkrecht zum Eintrittswinkel steht, ist die Umlenkoptik invariant gegenüber Verdrehen, Verschieben oder sonstigen Abweichungen. Der Bediener muss lediglich sicherstellen, dass der von der Strahlquelle ausgesandte Laserstrahl senkrecht zur Referenzfläche ausgesandt wird. Die Justierung der ersten und zweiten Reflexionsflächen der Umlenkoptik erfolgt bereits bei der Herstellung des Pentaprismas; eine Justierung der Reflexionsflächen durch den Bediener ist nicht erforderlich.

In einer weiteren bevorzugten Ausführungsform weist die Umlenkoptik eine erste und zweite reflektierende Optik auf, wobei die Reflexionsflächen der Optiken einen Winkel von 45° einschließen. Bei einem Winkel von 45° zwischen den Reflexionsflächen der Optiken sind der Laserstrahl vor der ersten Reflexionsfläche und der Laserstrahl nach der zweiten Reflexionsfläche senkrecht zueinander, und zwar unabhängig von einem Einfallswinkel des Laserstrahls zur ersten Reflexionsfläche.

Die erste und zweite reflektierende Optik sind besonders bevorzugt an einem gemeinsamen Trägerelement befestigt. Dies hat den Vorteil, dass Änderungen, die beispielsweise aus Temperaturschwankungen des Trägerelementes resultieren, auf beide reflektierenden Optiken gleichermaßen wirken und daher nur zu einer geringen Dejustage aus der justierten Position führen.

Bevorzugt weist die Umlenkeinheit eine Strahlteilungsoptik auf, die den Laserstrahl in einen ersten Teilstrahl und einen zweiten Teilstrahl teilt, wobei der zweite Teilstrahl entlang einer optischen Achse, die senkrecht zur ersten und zweiten optischen Achse verläuft, ausgesandt wird. Durch den zusätzlichen Strahlteiler wird ein Lotstrahl erzeugt, der auf den Untergrund auftrifft und dort eine punktförmige Lasermarkierung erzeugt. Die punktförmige Lasermarkierung auf dem Untergrund hilft dem Bediener, die Lasermarkierung exakt dort auszurichten, wo die Trennwand positioniert werden soll. Dazu ist kein Justageaufwand erforderlich, der Bediener muss lediglich sicherstellen, dass der Laserstrahl die Umlenkoptik trifft.

Bevorzugt weist die Umlenkeinheit eine weitere Umlenkoptik auf, die einen weiteren Laserstrahl, der entlang einer optischen Achse entgegengerichtet zur ersten optischen Achse auf die weitere Umlenkoptik auftrifft, als weiteren umgelenkten Laserstrahl entlang einer weiteren optischen Achse umlenkt, wobei die optischen Achsen der weiteren Umlenkoptik unter einem Winkel von 90° angeordnet sind und die optische Achse des weiteren umgelenkten Laserstrahls parallel zur optischen Achse des ersten umgelenkten Laserstrahls ausgerichtet ist. Die weitere Umlenkoptik ist besonders bevorzugt als weiteres Pentaprisma oder als Umlenkoptik mit einer ersten und zweiten reflektierenden Optik, deren Reflexionsflächen einen Winkel von 45° einschließen, ausgebildet. Eine Umlenkeinheit, die zwei Umlenkoptiken aufweist, hat den Vorteil, dass das Lasergerät in zwei einander entgegen gerichteten Richtungen aufgestellt sein kann. Abhängig von den Umgebungsbedingungen, die der Bediener vor Ort vorfindet, ist es möglich, dass er das Lasergerät nur in einer Richtung ausrichten kann. Die zwei Umlenkoptiken erlauben es dem Bediener, linienförmige Lasermarkierungen in zwei Richtungen anzuzeigen.

Die Aufgabe wird bei der Umlenkeinheit erfindungsgemäß durch die Merkmale des unabhängigen Anspruchs 14 gelöst. Die Umlenkeinheit für ein Lasersystem zum Erzeugen einer Lasermarkierung auf einem Untergrund weist eine Umlenkoptik auf, die einen Laserstrahl, der entlang einer ersten optischen Achse auf die Umlenkoptik auftrifft, als umgelenkten Laserstrahl um 90° entlang einer zweiten optischen Achse umlenkt. Die Umlenkeinheit entspricht der Umlenkeinheit des erfindungsgemäßen Lasersystems der Ansprüche 1 bis 13.

Die Umlenkeinheit ist zum einfallenden Laserstrahl verstellbar ausgebildet. Die Umlenkeinheit ist unabhängig von einem Lasergerät, das den Laserstrahl aussendet und entlang der ersten optischen Achse auf die Umlenkoptik richtet, ausgebildet; eine Kopplung oder Kommunikation der Umlenkeinheit mit dem Lasergerät ist nicht erforderlich. Daher kann jedes beliebige Lasergerät mit der erfindungsgemäßen Umlenkeinheit kombiniert werden, das Lasergerät erzeugt den auf die Umlenkoptik einfallenden Laserstrahl.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein erfindungsgemäßes Lasersystem mit einem Lasergerät und einer Umlenkeinheit, die auf einem Boden positioniert sind und auf dem Boden und einer Rückwand eine linienförmige Lasermarkierung erzeugen;
- FIG. 2A, B: eine erste Ausführungsform einer Umlenkeinheit mit einer passiven Nivelliereinrichtung (FIG. 2A) und einer als Pentaprisma ausgebildeten Umlenkoptik (FIG. 2B);
- FIG. 3A, B: eine zweite Ausführungsform einer Umlenkeinheit mit einer als Pentaprisma ausgebildeten Umlenkoptik und einer Strahlteilungsoptik in einer dreidimensionalen Darstellung (FIG. 3A) und in einem Schnitt längs einer Achse A-A (FIG. 3B);
- FIG. 4A, B: eine dritte Ausführungsform einer Umlenkeinheit mit einer als Pentaprisma ausgebildeten Umlenkoptik und einer aktiven Nivelliereinrichtung (FIG. 4A), wobei die Umlenkoptik in einem Scanmodus der aktiven Nivelliereinrichtung um eine Kippachse zwischen zwei Umkehrpunkten bewegbar ist (FIG. 4B);
- FIG. 5A, B: eine vierte Ausführungsform einer Umlenkeinheit mit einer ersten und zweiten reflektierenden Optik, deren Reflexionsflächen unter einem Winkel von 45° zueinander angeordnet sind, in einer dreidimensionalen Ansicht (FIG. 5A) und einer Ansicht von oben (FIG. 5B); und
- FIG. 6: eine fünfte Ausführungsform einer Umlenkeinheit mit der ersten und zweiten reflektierenden Optik der FIG. 5A sowie einer dritten und vierten reflektierenden Optik, deren Reflexionsflächen unter einem Winkel von 45° zueinander angeordnet sind.

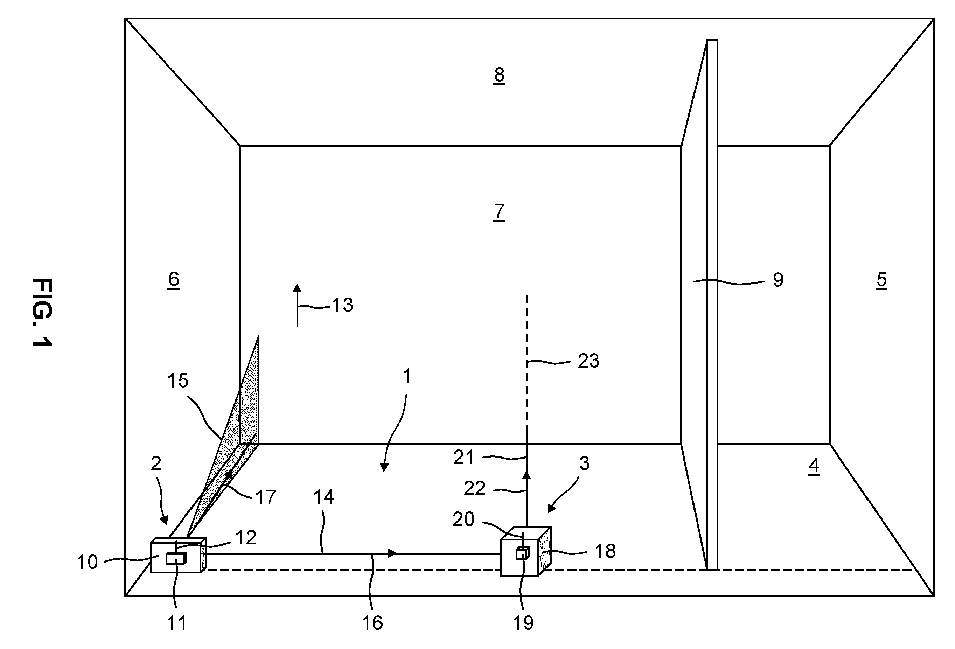

**FIG. 1** zeigt ein erfindungsgemäßes Lasersystem **1** zum Erzeugen einer Lasermarkierung auf einem Untergrund in einer schematischen Darstellung. Das Lasersystem 1 besteht aus einem Lasergerät **2** und einer Umlenkeinheit **3.**

Das Lasersystem 1 wird im Innenausbau zur Markierung der Lage von Trennwänden eingesetzt. FIG. 1 zeigt einen Innenraum bestehend aus einem Boden **4,** einer rechten und linken Seitenwand **5, 6,** einer Rückwand **7** und einer Decke **8.** Parallel zur linken Seitenwand 6 wurde bereits eine Trennwand **9** erstellt. Um die Lage weiterer Trennwände, die parallel zur linken Seitenwand 6 angeordnet sind, mit Hilfe des Lasersystems 1 zu markieren, wird das Lasergerät 2 zu der linken Seitenwand 6 ausgerichtet.

Das Lasergerät 2 umfasst ein Gehäuse **10** und eine in dem Gehäuse 10 angeordnete Laserstrahlquelle **11,** die an einer Nivelliereinrichtung **12** angeordnet ist. Die Nivelliereinrichtung 12 richtet die Laserstrahlquelle 11 unabhängig von der Ausrichtung des Gehäuses 10 auf dem Boden 4 parallel zu einer durch die Schwerkraft bestimmten vertikalen Richtung **13** aus. Das Lasergerät 2 ist als kombiniertes Punkt- und Linienlasergerät mit einem Punktstrahl **14** und einem Linienstrahl **15** ausgebildet. Der Punktstrahl 14 wird entlang einer ersten optischen Achse **16** und der Linienstrahl 15 entlang einer zweiten optischen Achse **17** ausgesandt.

Das Lasergerät 2 wird mit einer Unterseite des Gehäuses 10 oder einem Gerätefuß auf den Boden 4 gestellt und so ausgerichtet, dass der Punktstrahl 14 senkrecht und der Linienstrahl 15 parallel zur linken Seitenwand 6 verlaufen. Ein Lasergerät, das nur einen Punkt- oder Linienstrahl aussendet, wird so positioniert, dass die optische Achse des Punkt- oder Linienstrahls zur linken Seitenwand 6 oder parallel zur Rückwand 7 bzw. zu einer in FIG. 1 nicht dargestellten Vorderwand ausgerichtet ist.

Die Umlenkeinheit 3 umfasst ein Gehäuse **18** und eine in dem Gehäuse 18 angeordnete Umlenkoptik **19,** die an einer Nivelliereinrichtung **20** angeordnet ist. Die Nivelliereinrichtung 20 richtet die Umlenkoptik 19 unabhängig von der Ausrichtung des Gehäuses 18 am Boden 4 parallel zur vertikalen Richtung 13 aus. Die Umlenkeinheit 3 wird im gewünschten Abstand zum Lasergerät 2 so auf dem Boden 4 positioniert, dass die Umlenkoptik 19 im Strahlengang des Punktstrahls 14 angeordnet ist. Die Umlenkoptik 19 lenkt den Punktstrahl 14 in einen umgelenkten Punktstrahl **21** um. Der umgelenkte Punktstrahl 21 breitet sich entlang einer optischen Achse **22** aus, die senkrecht zur optischen Achse 16 des Punktstrahls 14 verläuft. Die erste und zweite optische Achse 16, 22 spannen eine Strahlebene auf.

Der umgelenkte Punktstrahl 21 breitet sich innerhalb der Strahlebene aus und erzeugt auf der Rückwand 7 eine punktförmige Lasermarkierung. Um eine linienförmige Lasermarkierung **23** auf dem Boden 4 und/oder der Rückwand 7 anzuzeigen, muss der Punktstrahl 21 mit Hilfe einer Strahlformungsoptik aufgeweitet werden oder der Punktstrahl muss in Richtung der optischen Achse 22 eine periodische Hin- und Herbewegung ausführen.

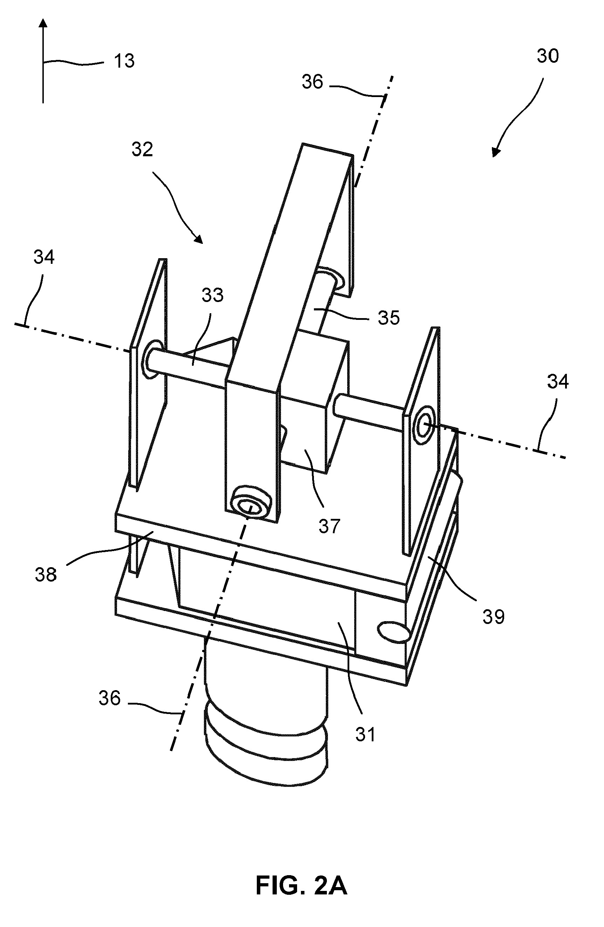

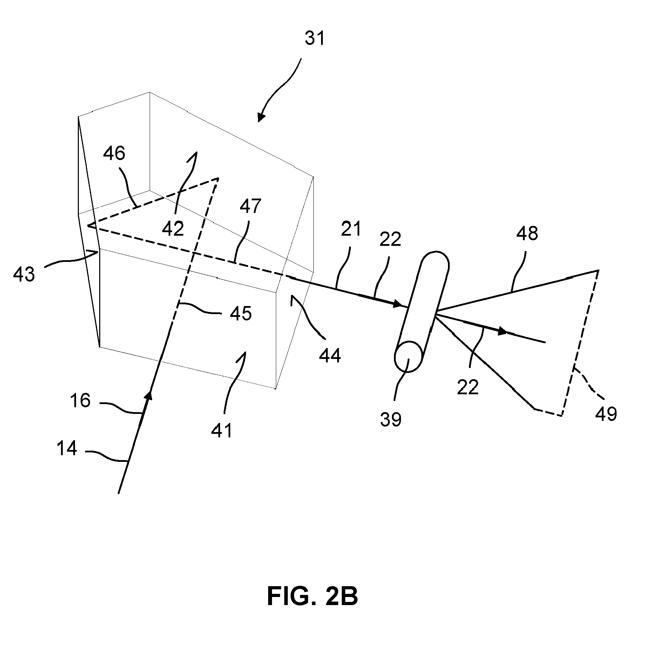

**FIG. 2A****, B** zeigen eine erste Ausführungsform einer Umlenkeinheit **30,** die eine als Pentaprisma ausgebildete Umlenkoptik **31** und eine passive Nivelliereinrichtung **32** aufweist. Dabei zeigt FIG. 2A das Pentaprisma 31, das an der passiven Nivelliereinrichtung 32 befestigt ist, und FIG. 2B das Pentaprisma 31 in einer vergrößerten Darstellung. Die Umlenkeinheit 30 kann im Lasersystem 1 die Umlenkeinheit 3 ersetzen.

Das Pentaprisma 31 ist mittels der passiven Nivelliereinrichtung 32, die als zweidimensionale Nivelliereinrichtung ausgebildet ist, im Schwerefeld der Erde selbstnivellierend gelagert. Die Nivelliereinrichtung 32 umfasst eine erste Achseinheit **33,** die entlang einer ersten Schwenkachse **34** ausgerichtet ist, und eine zweite Achseinheit **35,** die entlang einer zweiten Schwenkachse **36** ausgerichtet ist. Die Kopplung der ersten und zweiten Achseinheit 33, 35 erfolgt über ein Kopplungselement **37.** Das Pentaprisma 31 ist über ein Trägerelement **38** mit der ersten und zweiten Achseinheit 33, 35 der Nivelliereinrichtung 32 verbunden.

Alternativ kann die Nivelliereinrichtung als eindimensionale Nivelliereinrichtung ausgebildet sein. Die eindimensionale Nivelliereinrichtung umfasst die erste Achseinheit 33, die um die erste Schwenkachse 34 schwenkbar ausgebildet ist. Die zweite Achseinheit 35 ist nicht erforderlich, da ein Schwenken des Pentaprismas 31 um die zweite Schwenkachse 36 dazu führt, dass der umgelenkte Laserstrahl 21 um sich selbst gedreht wird. Soll der umgelenkte Laserstrahl 21 allerdings mittels einer Strahlformungsoptik geformt werden, ist eine zweidimensionale Nivelliereinrichtung erforderlich, um zu verhindern, dass die Richtung der Strahlformung geneigt ist.

Das Pentaprisma 31 lenkt den Punktstrahl 14 um 90° in der von den optischen Achsen 16, 22 aufgespannten Strahlebene um. Um auf dem Boden 4 und der Rückwand 7 eine linienförmige Lasermarkierung anzuzeigen, wird der umgelenkte Punktstrahl 21 mit Hilfe einer Strahlformungsoptik **39** aufgeweitet. Die Strahlformungsoptik 39 ist als Zylinderlinse ausgebildet und im Strahlengang des Punktstrahls 21 hinter dem Pentaprisma 31 angeordnet.

FIG. 2B zeigt die Umlenkoptik 31 in einer vergrößerten Darstellung. Die Umlenkoptik ist als Pentaprisma 31 mit einer Eintrittsfläche **41,** einer ersten Reflexionsfläche **42,** einer zweiten Reflexionsfläche **43** und einer Austrittsfläche **44** ausgebildet.

Der Punktstrahl 14 trifft über die Eintrittsfläche 41 als eingetretener Punktstrahl **45** in das Pentaprisma 31 ein. Der eingetretene Punktstrahl 45 wird an der ersten Reflexionsfläche 42 als einfach reflektierter Punktstrahl **46** und an der zweiten Reflexionsfläche 43 als zweifach reflektierter Punktstrahl **47** umgelenkt. Der zweifach reflektierte Punktstrahl 47 tritt über die Austrittsfläche 44 als umgelenkter Punktstrahl 21 aus dem Pentaprisma 31 aus. Die Umlenkung des Punktstrahls 45 an der ersten und zweiten Reflexionsfläche 42, 43 erfolgt um 90° und die optischen Achsen 16, 22 des eintretenden Punktstrahls 14 und des umgelenkten Punktstrahls 21 verlaufen senkrecht zueinander. Der umgelenkte Punktstrahl 21 trifft auf die Zylinderlinse 39, die den Punktstrahl 21 zu einem Linienstrahl **48** aufweitet, der auf dem Boden 4 und der Rückwand 7 eine sichtbare Lasermarkierung **49** erzeugt.

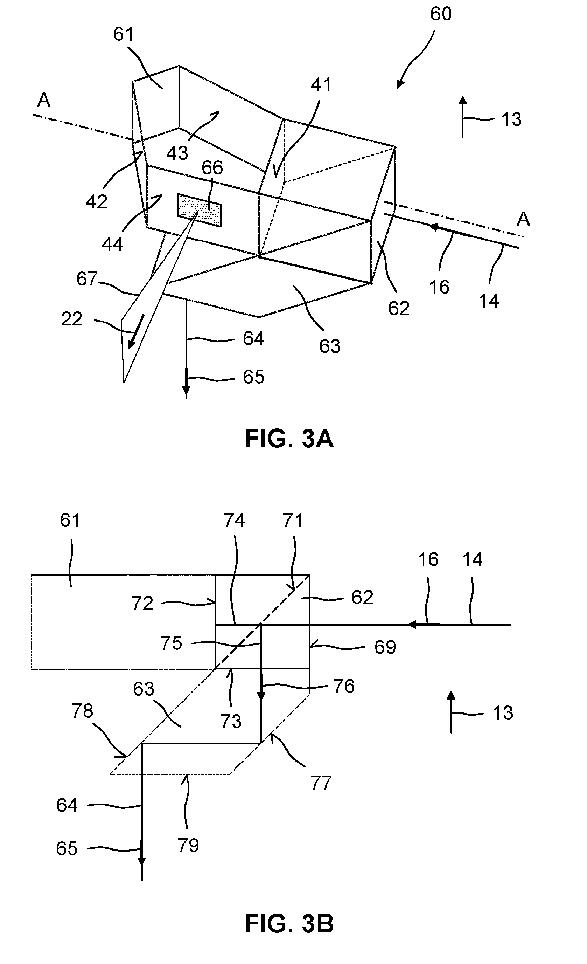

**FIG. 3A****, B** zeigen eine zweite Ausführungsform einer Umlenkeinheit **60,** die eine als Pentaprisma ausgebildete Umlenkoptik **61,** eine Strahlteilungsoptik **62** und eine Versetzungsoptik **63** aufweist. Dabei zeigt FIG. 3A die Umlenkeinheit 60 in einer dreidimensionalen Darstellung und FIG. 3B in einem Schnitt entlang der Schnittlinie A-A. Die Umlenkeinheit 60 kann im Lasersystem 1 die Umlenkeinheit 3 ersetzen.

Die Umlenkeinheit 60 unterscheidet sich von der Umlenkeinheit 30 der FIGN. 2A, B dadurch, dass neben dem umgelenkten Punktstrahl 21 ein Lotstrahl **64** erzeugt wird, der sich entlang einer optischen Achse **65** parallel zur vertikalen Richtung 13 ausbreitet. Der Lotstrahl 64 erzeugt auf dem Boden 4 eine punktförmige Lasermarkierung. Bei der Umlenkoptik 61 werden im Unterschied zur ebenfalls als Pentaprisma ausgebildeten Umlenkoptik 31, die vier optischen Flächen 41, 42, 43, 44 des Pentaprismas in entgegen gesetzter Richtung vom Laserstrahl 21 passiert. Außerdem ist eine Strahlformungsoptik **66** in das Pentaprisma 61 integriert.

Die Strahlformungsoptik 66 ist als diffraktives optisches Element ausgebildet. Diffraktive optische Elemente spalten einen einfallenden Laserstrahl winkelabhängig in verschiedene Beugungsordnungen und haben den Vorteil, dass sich Laserstrahlen in nahezu jede beliebige Strahlverteilung formen lassen. Ein diffraktives optisches Element kann nachträglich mittels scannender Strukturierungsverfahren, wie Diamantdrehen, Laser- oder Elektronenstrahlschreiben, in der Umlenkoptik 61 erzeugt werden. Die Strahlformungsoptik 66 weitet den umgelenkten Punktstrahl 21 in einer Richtung parallel zur vertikalen Richtung 13 zu einem Linienstrahl **67** auf, der sich entlang der zweiten optischen Achse 22 ausbreitet.

FIG. 3B zeigt die Umlenkeinheit 60 mit dem Pentaprisma 61, der Strahlteilungsoptik 62 und der Versetzungsoptik 63 in einem Schnitt entlang der Schnittlinie A-A. Die Strahlteilungsoptik 62 ist im Strahlengang des Punktstrahls 14 vor dem Pentaprisma 61 angeordnet.

Die Strahlteilungsoptik 62 umfasst eine Eintrittsfläche **69,** eine Teilungsfläche **71,** eine erste und zweite Austrittsfläche **72, 73.** Die erste Austrittsfläche 72 der Strahlteilungsoptik 62 fällt mit der Eintrittsfläche 41 des Pentaprismas 61 zusammen. Der Punktstrahl 14 tritt über die Eintrittsfläche 69 in die Strahlteilungsoptik 62 ein und trifft auf die Teilungsfläche 71. Die Teilungsfläche 71 teilt den Punktstrahl 14 in einen ersten Teilstrahl **74** und einen zweiten Teilstrahl **75.** Der erste Teilstrahl 74 tritt ohne Umlenkung durch die Teilungsfläche 71 und die Eintrittsfläche 41 in das Pentaprisma 61. Der zweite Teilstrahl 72 wird an der Teilungsfläche 71 entlang einer optischen Achse **76** umgelenkt, die senkrecht zur optischen Achse 16 des Punktstrahls 14 und damit parallel zur vertikalen Richtung 13 verläuft.

Damit der zweite Teilstrahl als Lotstrahl 64 den Mittelpunkt der Umlenkoptik 61 anzeigt, weist die Umlenkeinheit 60 die Versetzungsoptik 63 auf. Die Versetzungsoptik 63 umfasst eine Eintrittsfläche, eine erste und zweite Reflexionsfläche **77, 78** und eine Austrittsfläche **79.** Die Versetzungsoptik 63 grenzt unmittelbar an die zweite Austrittsfläche 73 der Strahlteilungsoptik 62 an und die zweite Austrittsfläche 73 der Strahlteilungsoptik 62 fällt mit der Eintrittsfläche der Versetzungsoptik 63 zusammen. Über den Abstand zwischen den Reflexionsflächen 77, 78 wird die Größe der Versetzung des zweiten Teilstrahls 75 eingestellt. Die Reflexionsflächen 77, 78 sind so voneinander beabstandet, dass der Lotstrahl 63 und der Mittelpunkt der Umlenkoptik 61 zusammenfallen.

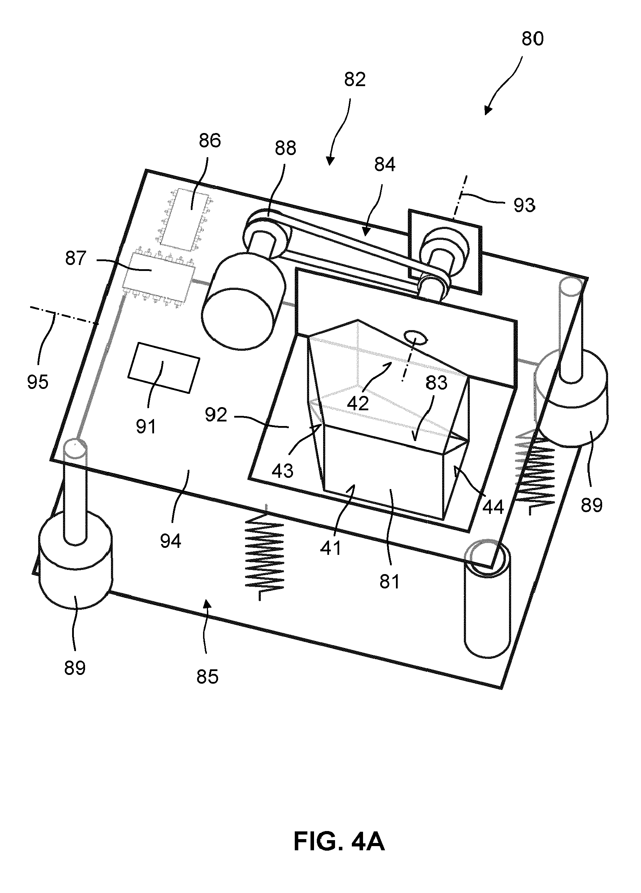

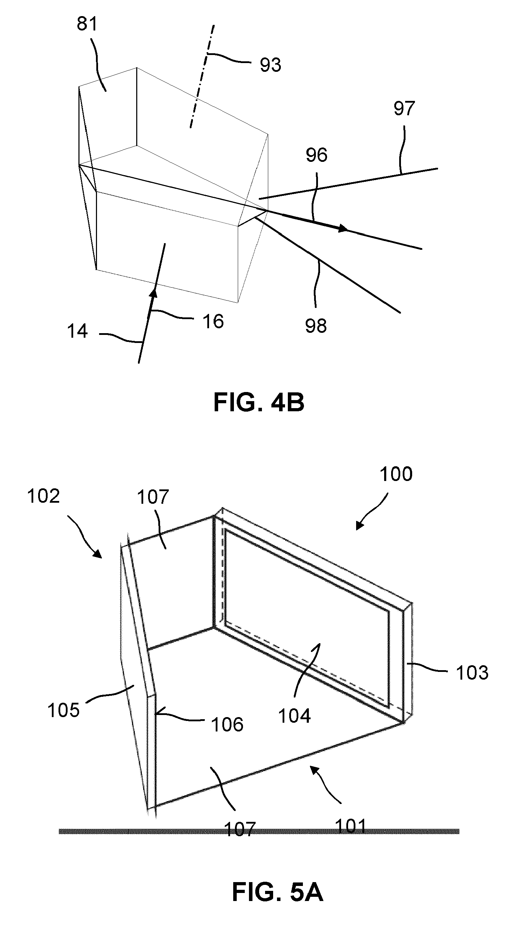

**FIG. 4A****, B** zeigen eine dritte Ausführungsform einer Umlenkeinheit **80,** die eine als Pentaprisma ausgebildete Umlenkoptik **81** und eine aktive Nivelliereinrichtung **82** aufweist, wobei die Umlenkoptik 81 und Nivelliereinrichtung 82 in einem Gehäuse angeordnet sind. Die Umlenkeinheit 80 kann im Lasersystem 1 die Umlenkeinheit 3 ersetzen.

FIG. 4A zeigt die Umlenkeinheit 80 in einer dreidimensionalen Darstellung. Die Umlenkoptik 81 ist als Pentaprisma mit der Eintrittsfläche 41, ersten Reflexionsfläche 42, zweiten Reflexionsfläche 43 und Austrittsfläche 44 ausgebildet. Zwischen der Eintrittsfläche 41 und der ersten Reflexionsfläche 43 ist eine Teilungsfläche **83** vorgesehen, an der der eintretende Laserstrahl 14 in einen ersten und zweiten Teilstrahl geteilt wird.

Die Nivelliereinrichtung 82 ist als aktive Nivelliereinrichtung ausgebildet, mit der der Punktstrahl 21 unabhängig von einer Ausrichtung des Gehäuses der Umlenkeinheit 80 auf dem Untergrund in einer zur vertikalen Richtung 13 senkrechten, horizontalen Ebene angeordnet wird. Die Nivelliereinrichtung 82 umfasst eine erste Nivelliereinheit **84** und eine zweite Nivelliereinheit **85.** Die Nivelliereinheiten 84, 85 umfassen jeweils eine Sensoreinrichtung **86, 87** und eine Verstelleinrichtung **88, 89.** Die Steuerung der Nivelliereinrichtung 82 erfolgt über eine Steuereinrichtung **91.**

Die Umlenkoptik 81 ist auf einem ersten Trägerelement **92** befestigt. Das erste Trägerelement 92 ist mittels der ersten Nivelliereinheit 84 um eine erste Kippachse **93** verstellbar ausgebildet. Die erste Nivelliereinheit 84 ist auf einem zweiten Trägerelement **94** befestigt. Das zweite Trägerelement 94 ist mittels der zweiten Nivelliereinheit 85 um eine zweite Kippachse **95** kippbar ausgebildet. Die erste Kippachse 93 ist senkrecht zur Eintrittsfläche 41 der Umlenkoptik 81 und die zweite Kippachse 95 senkrecht zur ersten Kippachse 93 ausgerichtet.

Die Umlenkeinheit 80 wird zunächst mit Hilfe der ersten und zweiten Nivelliereinheiten 84, 85 an der vertikalen Richtung 13 ausgerichtet. Das Lasergerät 10 sendet den Punktstrahl 14 aus, der über die Eintrittsfläche 41 in die Umlenkoptik 81 eintritt und an der Teilungsfläche 83 in einen ersten und zweiten Teilstrahl geteilt wird. Der zweite Teilstrahl tritt als Lotstrahl parallel zur vertikalen Richtung 13 aus der Umlenkoptik 81 aus und unterstützt den Bediener dabei, die Umlenkeinheit 80 an die gewünschte Stelle zu positionieren. Der erste Teilstrahl wird von den Reflexionsflächen 42, 43 des Pentaprismas 81 in der horizontalen Ebene senkrecht zur vertikalen Richtung 13 um 90° umgelenkt.

Die sichtbare Lasermarkierung auf dem Boden 4 und der Rückwand 7 wird mit Hilfe der ersten Nivelliereinheit 84 erzeugt. Die erste Nivelliereinheit 84 weist einen Scanmodus auf, der in FIG. 4B dargestellt. Die Umlenkoptik 81 wird im Scanmodus mit Hilfe der ersten Nivelliereinheit 84 um die erste Kippachse 93 zwischen zwei Umkehrpunkten periodisch hin und her bewegt. Der Scanmodus der ersten Nivelliereinheit 84 ist über die Steuereinrichtung 91 einstellbar. Der umgelenkte Laserstrahl wird zwischen zwei Umkehrpunkten hin und her bewegt. Als Hauptachse **96** ist eine Achse definiert, die durch den Mittelpunkt des hin und her bewegten Laserstrahls verläuft. Die Laserstrahlen, die in den Umkehrpunkten erzeugt werden, sind mit den Bezugszeichen **97, 98** versehen.

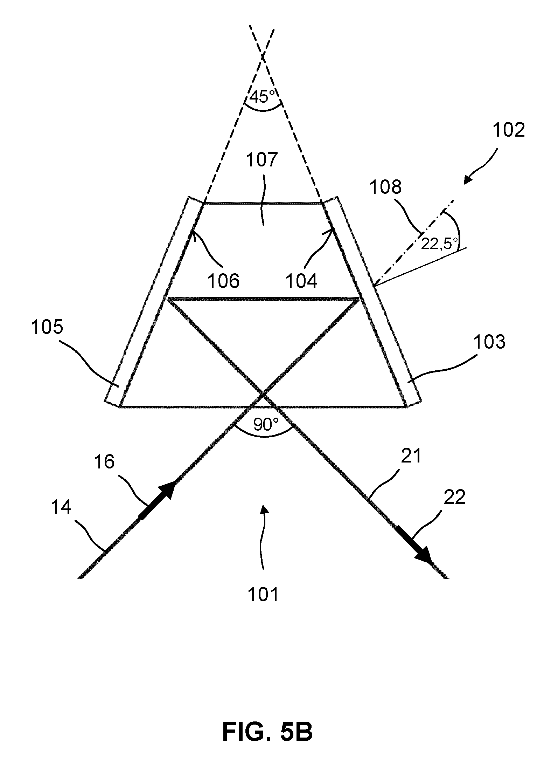

**FIG. 5A****, B** zeigen eine vierte Ausführungsform einer Umlenkeinheit **100,** die eine Umlenkoptik **101** und eine Nivelliereinrichtung **102,** die als aktive Nivelliereinrichtung analog zur aktiven Nivelliereinrichtung 82 der FIG. 4A ausgebildet ist, aufweist. Die Umlenkeinheit 100 kann im Lasersystem 1 die Umlenkeinheit 3 ersetzen.

FIG. 5A zeigt die Umlenkeinheit 100 in einer dreidimensionalen Darstellung. Die Umlenkoptik 101 weist eine erste reflektierende Optik **103** mit einer ersten Reflexionsfläche **104** und eine zweite reflektierende Optik **105** mit einer zweiten Reflexionsfläche **106** auf. Die Reflexionsflächen 104, 106 der beiden reflektierenden Optiken 103, 105 schließen einen Winkel von 45° ein. Die erste und zweite reflektierende Optik 103, 105 sind an einem gemeinsamen Trägerelement **107** befestigt und über das Trägerelement 107 mit der Nivelliereinrichtung 102 verbunden.

FIG. 5B zeigt die Umlenkeinheit 100 in einer Ansicht von oben. Der Punktstrahl 14 trifft auf die erste Reflexionsfläche 104, wird dort umgelenkt und trifft anschließend auf die zweite Reflexionsfläche 106. Der Bediener muss lediglich sicherstellen, dass der Punktstrahl 14 im Winkelbereich von ca. 22,5° ± 10° auf die erste Reflexionsfläche 104 auftrifft. Bei einem Einfallswinkel von 0° wird der Laserstrahl in sich selbst reflektiert und es tritt kein umgelenkter Laserstrahl aus der Umlenkoptik 101 aus.

Bei einem Winkel von 45° zwischen den Reflexionsflächen 104, 106 der reflektierenden Optiken 103, 105 sind der Laserstrahl vor der ersten Reflexionsfläche 104, d.h. der Punktstrahl 14, und der Laserstrahl nach der zweiten Reflexionsfläche 106, d.h. der Punktstrahl 21, senkrecht zueinander ausgerichtet. Die senkrechte Ausrichtung der beiden Laserstrahlen 14, 21 gilt in dem Winkelbereich zwischen ca. 22,5° ± 10° unabhängig vom genauen Einfallswinkel zwischen dem Laserstrahl 14 und der ersten Reflexionsfläche 104. Dabei beträgt der Einfallswinkel bei senkrechtem Einfall auf eine Reflexionsfläche 0°.

Um auf dem Boden 4 und der Rückwand 7 eine linienförmige Lasermarkierung anzuzeigen, ist die Nivelliereinrichtung 102 in einem Scanmodus betreibbar. Im Scanmodus wird die Umlenkoptik 101 um eine Kippachse **108,** die mit einer Nivellierachse zusammenfällt, hin und her bewegt. Die Kippachse 108 ist um einen Winkel von 22,5° zur Normalen der ersten Reflexionsfläche 104 geneigt.

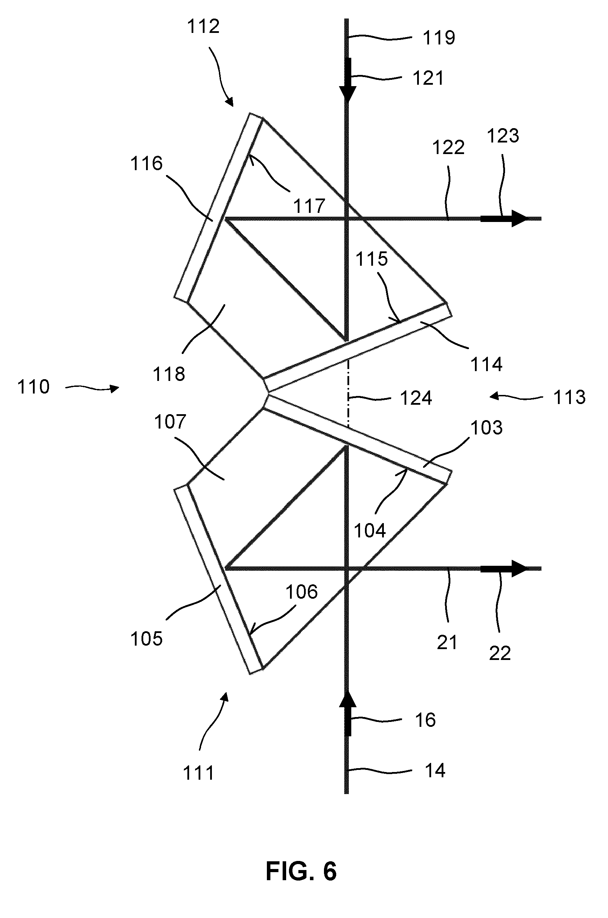

**FIG. 6** zeigt eine fünfte Ausführungsform einer Umlenkeinheit **110,** die eine erste Umlenkoptik **111** und eine zweite Umlenkoptik **112** aufweist. Die erste und zweite Umlenkoptik 111, 112 sind an einer Nivelliereinrichtung **113** befestigt, die als aktive Nivelliereinrichtung analog zur aktiven Nivelliereinrichtung 82 der FIG. 4A ausgebildet ist. Die Umlenkeinheit 110 kann im Lasersystem 1 die Umlenkeinheit 3 ersetzen.

Die erste Umlenkoptik 111 entspricht der Umlenkoptik 101 der FIG. 5A und umfasst die erste und zweite reflektierende Optik 103, 105 mit der ersten und zweiten Reflexionsfläche 104, 106, die einen Winkel von 45° einschließen. Die zweite Umlenkoptik 112 umfasst eine dritte reflektierende Optik **114** mit einer dritten Reflexionsfläche **115** und eine vierte reflektierende Optik **116** mit einer vierten Reflexionsfläche **117.** Die dritte und vierte reflektierende Optik 114, 116 sind an einem gemeinsamen Trägerelement **118** befestigt. Die dritte und vierte Reflexionsfläche 115, 117 schließen einen Winkel von 45° ein.

Der Punktstrahl 14 breitet sich entlang der ersten optischen Achse 16 aus, trifft auf die erste Reflexionsfläche 104, wird dort umgelenkt und trifft anschließend auf die zweite Reflexionsfläche 106. Ein Punktstrahl **119,** der parallel zum Punktstrahl 14, aber in entgegen gesetzter Richtung entlang einer dritten optischen Achse **121** propagiert, trifft auf die dritte Reflexionsfläche 115, wird dort umgelenkt und trifft anschließend auf die vierte Reflexionsfläche 117. Der Punktstrahl wird an der vierten Reflexionsfläche 117 als umgelenkter Punktstrahl **122** entlang einer optischen Achse **123** umgelenkt, die senkrecht zur optischen Achse 121 des Punktstrahls 119 verläuft.

Die aktive Nivelliereinrichtung 113 weist einen Scanmodus auf, um die umgelenkten Laserstrahlen 21, 122 zwischen zwei Umkehrpunkten hin und her zu bewegen. Im Scanmodus werden die erste und zweite Umlenkoptik 111, 112 um eine Kippachse **124,** die mit einer Nivellierachse der Nivelliereinrichtung 113 zusammenfällt, hin und her bewegt. Die Kippachse 124 ist um einen Winkel von 22,5° zur Normalen der ersten Reflexionsfläche 104 und zur Normalen der dritten Reflexionsfläche 115 geneigt.

FIG. 6 zeigt eine Ausführungsform, bei der die erste und zweite Umlenkoptik 111, 112 im Scanmodus gemeinsam um die Kippachse 124 gekippt werden. Alternativ können die erste Umlenkoptik 111 von einer ersten Verstelleinrichtung und die zweite Umlenkoptik 112 von einer zweiten Verstelleinrichtung unabhängig voneinander um die Kippachse 124 gekippt werden.

## Patentansprüche

1. Lasersystem (1) zum Erzeugen einer Lasermarkierung (23; 49) auf einem Untergrund (4, 7) aufweisend ein Lasergerät (2) mit einer Strahlquelle (11), die einen Laserstrahl (14) entlang einer ersten optischen Achse (16) aussendet,
**gekennzeichnet durch**
eine Umlenkeinheit (3; 30; 60; 80; 100; 110) mit einer Umlenkoptik (19; 31; 61; 81; 101; 111), die den Laserstrahl (14) als umgelenkten Laserstrahl (21) entlang einer zweiten optischen Achse (22) umlenkt, wobei die erste und zweite optische Achse (16, 22) unter einem Winkel von 90° angeordnet sind und die Umlenkeinheit (3; 30; 60; 80; 100; 110) zum Lasergerät (2) verstellbar ist.

2. Lasersystem nach Anspruch 1, **dadurch gekennzeichnet, dass** die Strahlquelle (11) in einem ersten Gehäuse (10) und die Umlenkoptik (19) in einem zweiten Gehäuse (18) angeordnet sind.

3. Lasersystem nach Anspruch 2, **dadurch gekennzeichnet, dass** die Strahlquelle (11) an einer ersten Nivelliereinrichtung (12) unabhängig von der Ausrichtung des ersten Gehäuses (10) und die Umlenkoptik (19; 31; 81; 111, 112) an einer zweiten Nivelliereinrichtung (20; 32; 82; 102; 113) unabhängig von der Ausrichtung des zweiten Gehäuses (18) auf dem Untergrund (4) an einer durch die Schwerkraft bestimmten vertikalen Richtung (13) ausrichtbar sind.

4. Lasersystem nach Anspruch 3, **dadurch gekennzeichnet, dass** die zweite Nivelliereinrichtung als passive Nivelliereinrichtung (32) ausgebildet ist.

5. Lasersystem nach Anspruch 4, **dadurch gekennzeichnet, dass** die Umlenkeinheit (30; 60) eine Strahlformungsoptik (39; 66) aufweist, die den umgelenkten Laserstrahl (21) in einer Richtung senkrecht zu einer von der ersten und zweiten optischen Achse (16, 22) aufgespannten Strahlebene aufweitet.

6. Lasersystem nach Anspruch 5, **dadurch gekennzeichnet, dass** die Strahlformungsoptik (66) in die Umlenkoptik (61) integriert ist.

7. Lasersystem nach Anspruch 5, **dadurch gekennzeichnet, dass** die Strahlformungsoptik unmittelbar an die Umlenkoptik (31) angrenzt.

8. Lasersystem nach Anspruch 3, **dadurch gekennzeichnet, dass** die zweite Nivelliereinrichtung als aktive Nivelliereinrichtung (82; 102; 113) ausgebildet ist.

9. Lasersystem nach Anspruch 8, **dadurch gekennzeichnet, dass** die aktive Nivelliereinrichtung (82; 102, 112) in einem Scanmodus betreibbar ist.

10. Lasersystem nach einem der Ansprüche 1 bis 9, **dadurch gekennzeichnet, dass** die Umlenkoptik (31; 61; 81) als Pentaprisma mit einer Eintrittsfläche (41), einer ersten und zweiten Reflexionsfläche (42, 43) und einer Austrittsfläche (44) ausgebildet ist.

11. Lasersystem nach einem der Ansprüche 1 bis 9, **dadurch gekennzeichnet, dass** die Umlenkoptik (101) eine erste und zweite reflektierende Optik (103, 105) mit einer ersten und zweiten Reflexionsfläche (104, 106) aufweist, wobei die Reflexionsflächen (104, 106) einen Winkel von 45° einschließen.

12. Lasersystem nach einem der Ansprüche 1 bis 11, **dadurch gekennzeichnet, dass** die Umlenkeinheit (60; 80) eine Strahlteilungsoptik (62; 83) aufweist, die den Laserstrahl (14) in einen ersten Teilstrahl (74) und einen zweiten Teilstrahl (75) teilt, wobei der zweite Teilstrahl (75) entlang einer optischen Achse (76), die senkrecht zur ersten optischen Achse (14) verläuft, ausgesandt wird.

13. Lasersystem nach einem der Ansprüche 1 bis 12, **dadurch gekennzeichnet, dass** die Umlenkeinheit (110) eine weitere Umlenkoptik (112) aufweist, die einen weiteren Laserstrahl (119), der entlang einer optischen Achse (121) entgegengerichtet zur ersten optischen Achse (16) auf die weitere Umlenkoptik (112) auftrifft, als weiteren umgelenkten Laserstrahl (122) entlang einer weiteren optischen Achse (123) umlenkt, wobei die optischen Achsen (121, 123) der weiteren Umlenkoptik (112) unter einem Winkel von 90° angeordnet sind und die optische Achse (123) parallel zur optischen Achse (22) ausgerichtet ist.

14. Umlenkeinheit (3; 30; 60; 80; 100; 110) für ein Lasersystem (1) zum Erzeugen einer Lasermarkierung (23; 49) auf einem Untergrund (4, 7) aufweisend
eine Umlenkoptik (19; 31; 61; 81; 101; 111), die einen Laserstrahl (14), der entlang einer ersten optischen Achse (16) auf die Umlenkoptik (19; 31; 61; 81; 101; 111) auftrifft, als umgelenkten Laserstrahl (21) um 90° entlang einer zweiten optischen Achse (22) umlenkt.
